# EUROPEAN PATENT SPECIFICATION

(11) **EP 1 160 445 B1**
(45) Date of publication and mention of the grant of the patent: **02.03.2005**
(21) Application number: 01112718.0
(22) Date of filing: 25.05.2001
(51) Int. Cl.: F02M 37/10, B60K 15/077

(54) **Fuel supplying apparatus**
Brennstoffzufuhrvorrichtung
Dispositif d'alimentation en carburant

(30) Priority: 29.05.2000 JP 2000158393
(43) Date of publication of application: 05.12.2001
(73) Proprietor: Mitsuba Corporation, Kiryu-shi, Gunma-ken (JP)
(72) Inventor: Narushima, Masahiko, Kiryu-shi, Gunma (JP); Mori, Shinya, Kiryu-shi, Gunma (JP)
(74) Representative: Prato, Roberto

(56) References cited:
- DE-A- 3 704 191
- DE-A- 19 617 496
- DE-C- 19 843 022

## Description

### BACKGROUND OF THE INVENTION

The present invention relates to a fuel supplying apparatus for supplying fuel to an engine of an automobile or the like.

Generally, a fuel supplying apparatus for supplying fuel to an engine of an automobile or the like has been disclosed, for example, in Japanese Patent Laid-open No. 2000-72074. This fuel supplying apparatus has a cup-like main body provided in a bottom opening of a fuel tank, and a fuel pump accommodated in the main body.

Therefore, when a vehicle or the like having slightly remaining fuel in the fuel tank makes a repetition of accelerating and decelerating, or cornering, or the like, even if oil level of the remaining fuel changes very hard, the fuel present in the main body is prevented from flying out into the fuel tank.

### SUMMARY OF THE INVENTION

However, in the above-described prior art, in the bottom of the main body, a pipe for supplying the engine with the fuel and a power supplying connector for driving the fuel pump are provided. As a result of this, the fuel supplying apparatus increases in size, which causes lower flexibility of layout thereof.

Furthermore, since the main body has parts other than the fuel pump therein, bottom area of the main body becomes large, which causes the fuel level to be lowered. For this reason, there is the drawback that the fuel pump sucks the air present in the fuel tank when the remaining amount of fuel present in the fuel tank is reduced. That is, it is impossible to stably supply the engine with the fuel.

Another example of fuel supplying apparatus is disclosed in DE-A-3704191. According to thus document the fuel supplying apparatus is accomodated in a depression of the bottom wall of the fuel tank.

An object of the present invention is to provide a fuel supplying apparatus in which miniaturization thereof is achieved, the flexibility of the layout thereof is improved, and supply of fuel to the engine therefrom is stabilized

According to the present invention there is provided a fuel supplying apparatus according to claim 1.

Furthermore, the fuel supplying apparatus according to the present invention has such a structure that the reservoir includes a strainer for purifying the fuel discharged from the fuel pump, and a pressure regulator for regulating pressure of the fuel and keeping the pressure constant.

Furthermore, the fuel supplying apparatus according to the present invention is characterized in that the auxiliary reservoir accommodates a pump filter of the fuel pump therein.

Moreover, the fuel supplying apparatus according to the present invention may have such a structure that an area of a bottom surface of the auxiliary reservoir is approximately equal to that of a lower portion of the pump filter.

### BRIEF DESCRIPTION OF THE DRAWINGS

FIG. 1 is a side cross section showing the state that a fuel supplying apparatus which is a first embodiment of the present invention is mounted to a fuel tank.
FIG. 2 is an essentially side view showing a fuel reserving structure of the fuel supplying apparatus.
FIG. 3 is a plane view of FIG. 2.
FIG. 4 is a plane view showing the lower case of FIG. 3.
FIG. 5 is a rear view showing the lower case of FIG. 3.
FIG. 6 is a cross section taken along line X-X under the state that the conjunction cover is removed in FIG. 3.
FIG. 7 is a plane view showing the upper case of FIG. 3.
FIG. 8 is a side view showing the upper case of FIG. 3.
FIG. 9 is a cross section taken along line Y-Y of FIG. 3.
FIG. 10 shows a structure of the fuel supplying apparatus that is a second embodiment of the present invention, and is a side cross section showing the state that the fuel supplying apparatus is mounted to the fuel tank.

### DESCRIPTION OF THE PREFERRED EMBODIMENTS

In the following, embodiments of the present invention will be explained with reference to the drawings.

### (First embodiment)

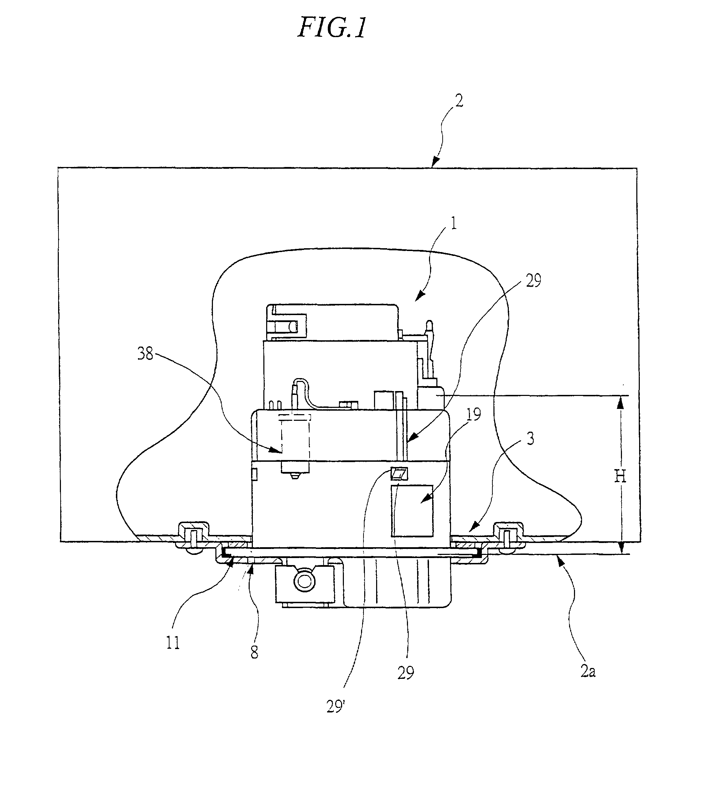

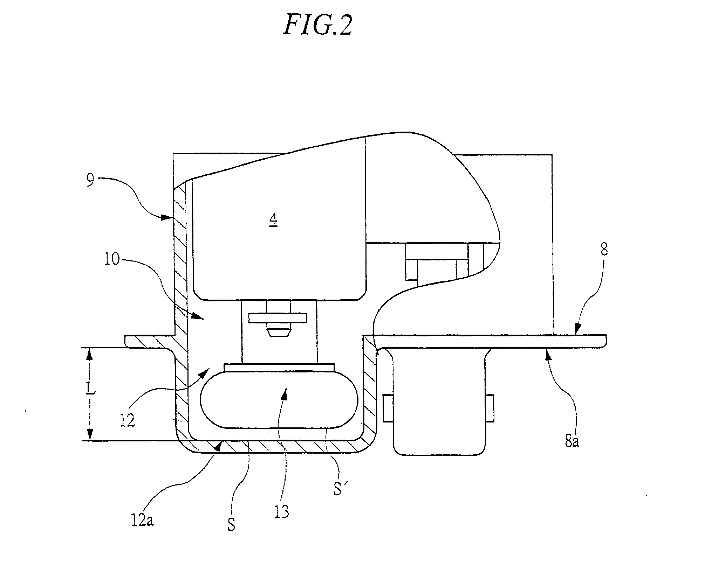

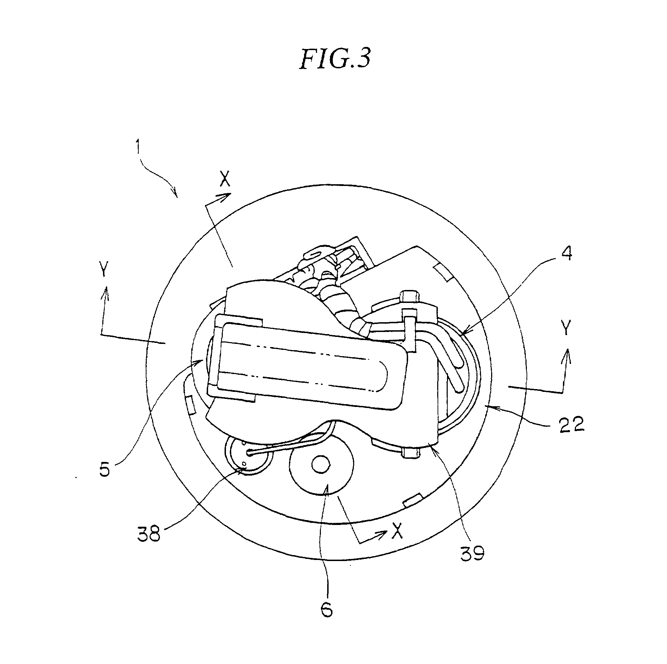

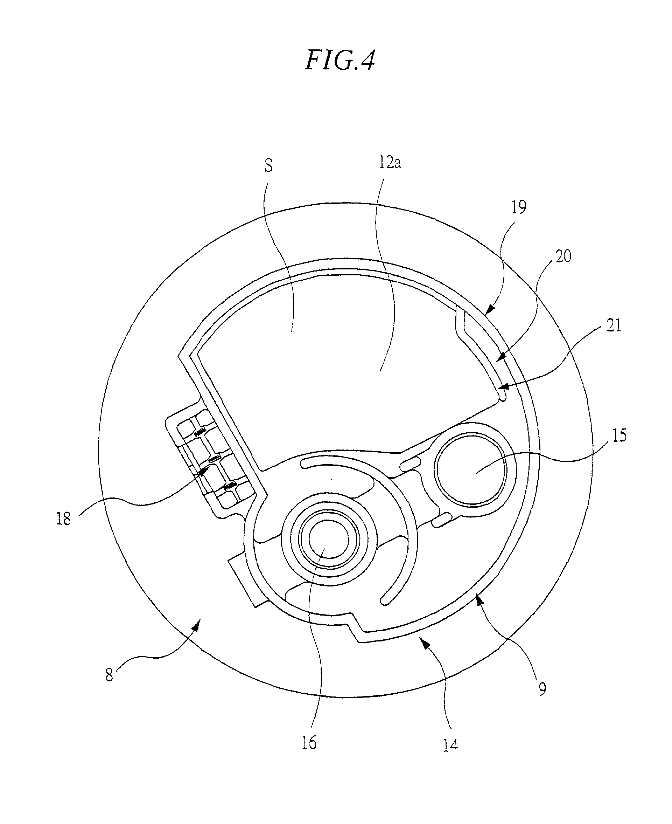

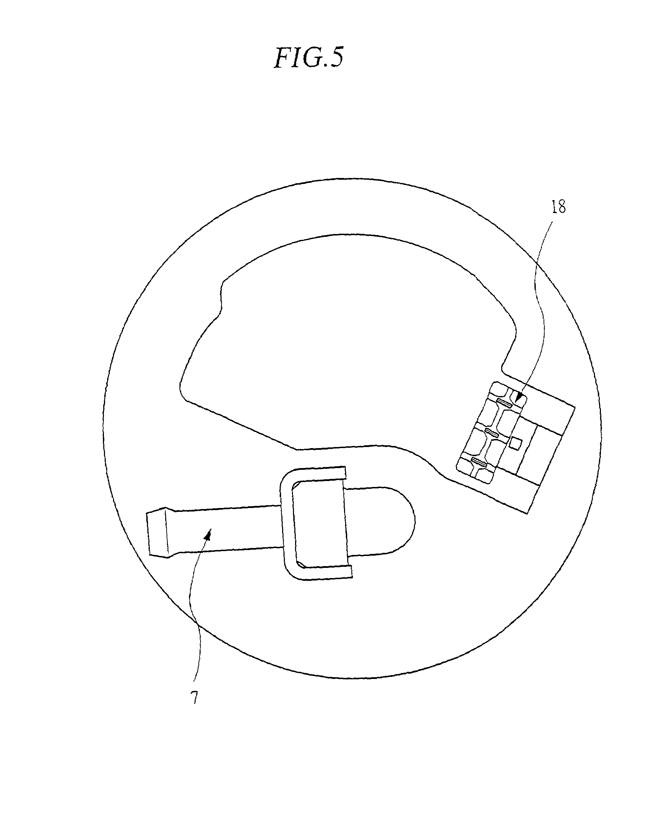

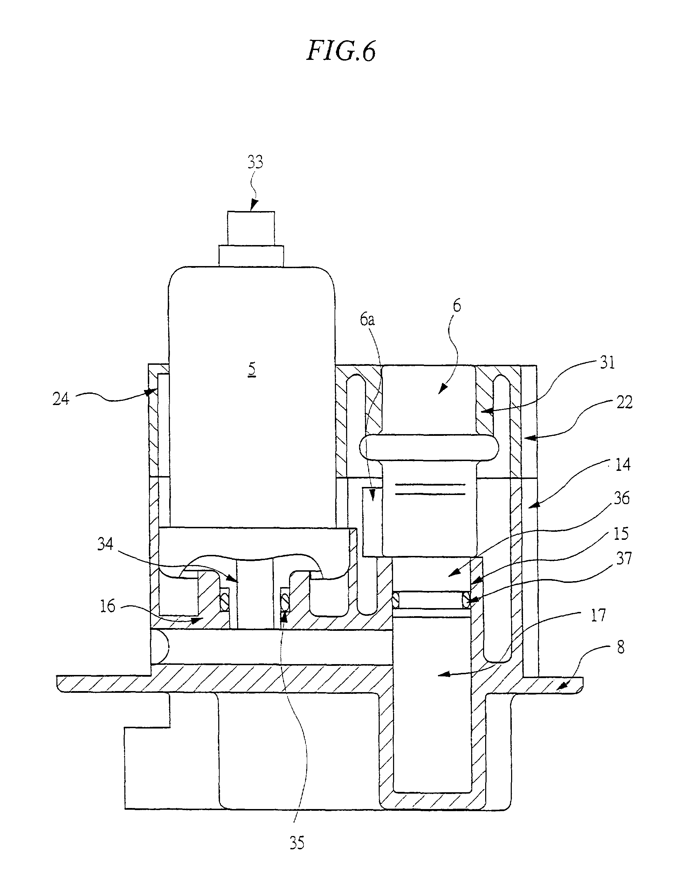

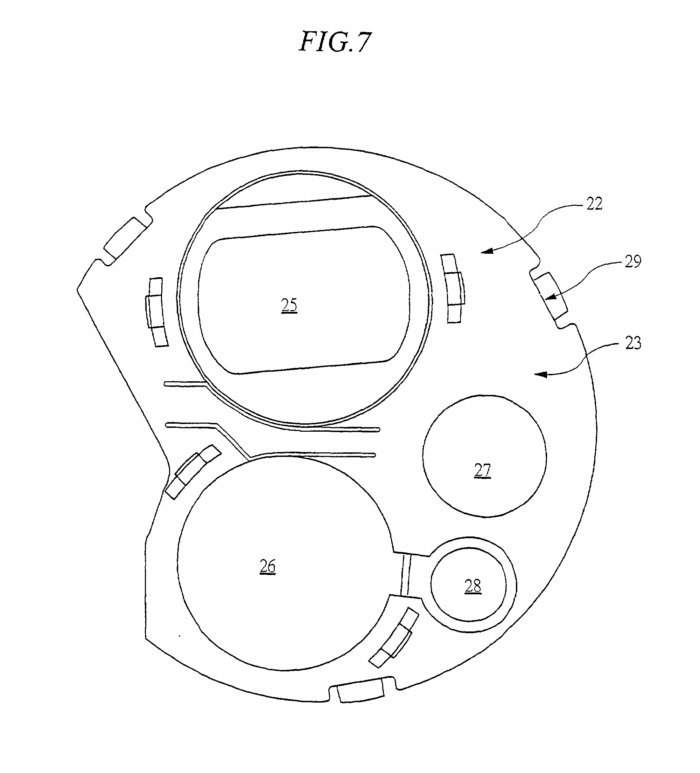

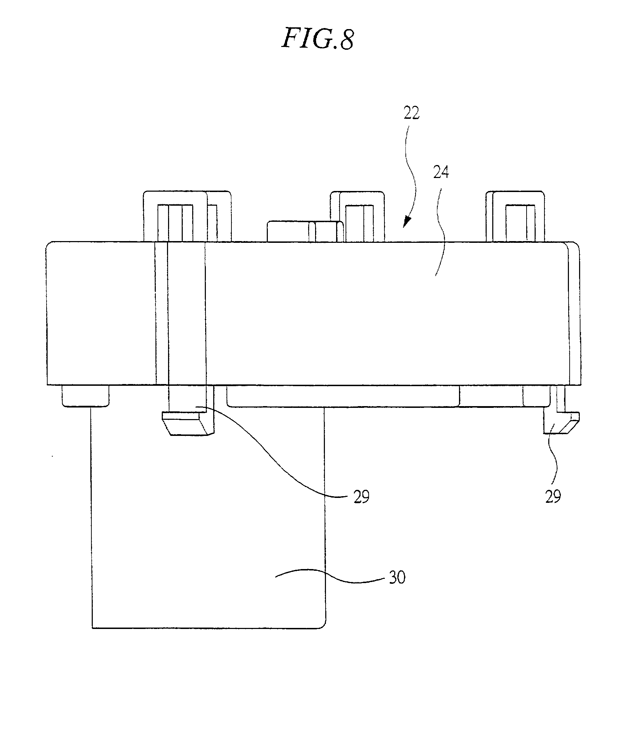

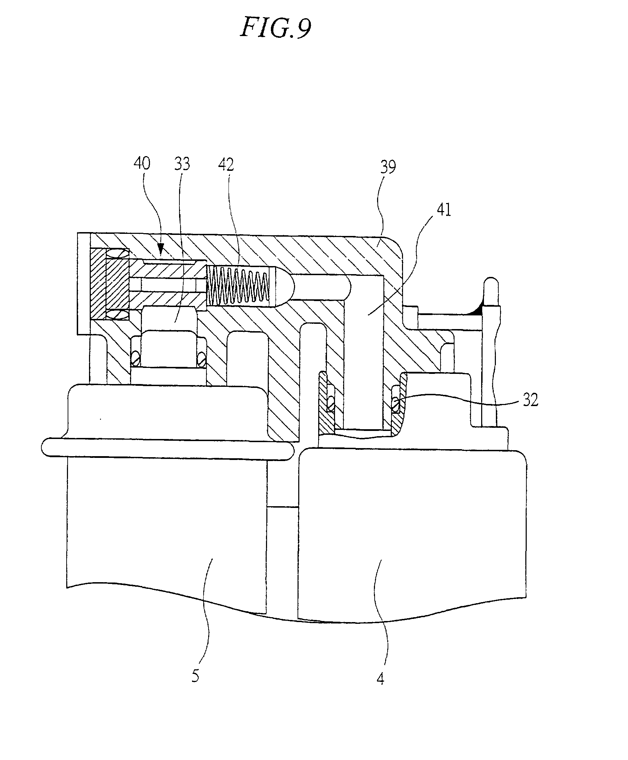

FIG. 1 is a side cross section showing the state that a fuel supplying apparatus which is a first embodiment of the present invention is mounted to a fuel tank. FIG. 2 is an essentially side view showing a fuel reserving structure of the fuel supplying apparatus. FIG. 3 is a plane view of FIG. 2. FIG. 4 is a plane view showing the lower case of FIG. 3. FIG. 5 is a rear view showing the lower case of FIG. 3. FIG. 6 is cross section taken along line X-X under the state that the conjunction cover is removed in FIG. 3. FIG. 7 is a plane view showing the upper case of FIG. 3. FIG. 8 is a side view showing the upper case of FIG. 3. FIG. 9 is a cross section taken along line Y-Y of FIG. 3.

As shown in FIG. 1, a fuel supplying apparatus 1 corresponds to a gasoline supplying apparatus for a motor bicycle, and is mounted to an opening 3 formed in a bottom portion 2a of a fuel tank 2, from a downside direction of the fuel tank 2.

As shown in FIGs. 2 to 9, the fuel supplying apparatus 1 has a fuel pump 4, a strainer 5, and a pressure regulator 6 which are made into a module. The fuel sucked by the fuel pump 4 is purified by the strainer 5, pressure of the fuel is regulated to a predetermined value by the pressure regulator 6, and the purified and regulated fuel is supplied to an engine (not shown) via a fuel pipe (not shown) from a discharge port 7.

On the bottom portion of the fuel supplying apparatus 1 is formed a flange 8 serving as a base plate. The flange 8 and a reservoir 10 which forms a side wall 9 are integrally formed of a synthetic resin. By attaching the flange 8 to the opening 3 via a packing 11 in oil-tight manner, the fuel supplying apparatus 1 can be easily mounted to the fuel tank 2. As a result of this, it is possible to improve an operability of mounting the fuel supplying apparatus 1 to the fuel tank 2.

As shown in FIG. 2, the fuel supplying apparatus 1 is constituted such that an auxiliary reservoir 12 is provided in a bottom portion of the reservoir 10, and a pump filter 13 of the fuel pump 4 is held within the auxiliary reservoir 12.

As shown in FIGs. 4 to 6, a lower case 14 of the fuel supplying apparatus 1 has the disc-like flange 8 and the side wall 9 provided integrally with the flange 8 in standing manner. In a bottom portion of the lower case 14 is formed the auxiliary reservoir 12 so as to be depressed. In an area other than the area locating the auxiliary reservoir 12 in the bottom portion of the lower case 14, are located a pressure regulator mounting portion 15 and a strainer mounting portion 16. The pressure regulator mounting portion 15 and the strainer mounting portion 16 are respectively connected to a fuel passage 17 provided in the flange 8. The fuel passage 17 supplies the engine with the fuel from the discharge port 7 provided on a side of the bottom portion of the lower case 14 via a fuel pipe (not shown) connected to the discharge port 7.

Furthermore, in the bottom-portion side of the lower case 14, a power supplying connector 18 for supplying the fuel pump 4 with electric current from power source such as battery is located so as to be adjacent to the auxiliary reservoir 12.

Although a depth L of the auxiliary reservoir 12 can be set as desired, in the first embodiment of the present invention, the depth L is approximately equal to a distance between a lower surface 8a of the flange 8 and the discharge port 7 and a distance between the lower surface 8a and the power supplying connector 18. An area S of a bottom surface 12a of the auxiliary reservoir 12 is set to be approximately equal to an area S' of a lower portion of the pump filter 13. As a result of this, it is possible to prevent the fuel pump 4 from becoming large in size.

The auxiliary reservoir 12 is at lower position than the reservoir 10, and the bottom-surface area S of the auxiliary reservoir 12 is smaller than a bottom-surface area of the reservoir 10 and approximately equal to the lower-portion area S' of the pump filter 13. Accordingly, even if the fuel present within the reservoir 10 is reduced, the fuel is reserved in the auxiliary reservoir 12 so that oil level of the fuel rises from the bottom surface 12a of the auxiliary reservoir 12. In this way, it is possible to immerse the pump filter 13 (a fuel suction port) of the fuel pump 4 in the fuel for a longer time. And, the fuel pump 4 can not only be prevented from sucking the air present in the reservoir 10, but also restrict an amount of unavailably remaining fuel in the reservoir 10 to a minimum. Therefore, efficient and stable supply of the fuel to the engine is achieved.

Furthermore, a distance (or a height) H of the fuel pump 4 projecting from the flange 8 of the lower case 14 can shorter (lower) to such a degree that the pump filter 13 can be accommodated in the auxiliary reservoir 12, that is, to the distance L. As a result of this, it is possible to restrict the height of the fuel supplying apparatus 1 itself so as to lower, and achieve miniaturization of the fuel supplying apparatus 1 in size.

As shown in FIG. 4, in vicinity of an inner peripheral side of a fuel inlet 19 formed within the lower case 4, is provided a labyrinth structure 20 for preventing the fuel accommodated in the reservoir 10 from easily flowing out of the reservoir 10. The labyrinth structure 20 comprises the fuel inlet 19 formed by cutting partially off the side wall 9, and a labyrinth wall 21 formed integrally with the side wall 9 in the inner peripheral side so as to face to the fuel inlet 19. That is, it is difficult for the fuel accommodated in the reservoir 10 from the fuel inlet 19 to easily flow out of the fuel inlet 19 owing to the labyrinth wall 21 even if oil level of the fuel changes in accelerating or decelerating of a motor bicycle, or in changing of a position thereof. Accordingly, it is possible to improve a function of reserving the fuel within the reservoir (that is, a reservoir function).

As shown in FIG. 3 and FIGs. 6 to 8, an upper case 22 of the fuel supplying apparatus 1 comprises a ceiling plate 23, and an upper case side wall 24 downwardly and continually formed on a peripheral edge of the ceiling plate 23. And, in the ceiling plate 23, a pump inserting hole 25, a strainer inserting hole 26, a regulator inserting hole 27, and a sensor inserting hole 28 are formed, respectively. Although, in the present embodiment, capping of the upper case 22 on the lower case 14 is executed by engaging an engagement pawl 29 formed on the upper case 22 and an engagement hole 29' formed in the lower case 14, the capping may be executed by any means. Furthermore, on a peripheral edge of the pump inserting hole 25, a fuel pump holder 30 is formed downwardly and integrally. On a peripheral edge of the regulator inserting hole 27, a regulator holder 31 is downwardly formed.

As shown in FIGs. 2, 3 and 9, the fuel pump 4 is inserted into the pump inserting hole 25, and held within the fuel pump holder 30. The pump filter 13 is detachably attached to one end of the fuel pump 4, and a discharge port 32 is formed in the other end of the fuel pump 4. The pump filter 13 is designed so as to be accommodated in the auxiliary reservoir 10 when the fuel pump 4 is held in the fuel pump holder 30.

As shown in FIGs. 4, 6 and 9, the strainer 5 has an inlet 33 formed in one end thereof, and an outlet 34 provided in the other end thereof. When the strainer 5 is inserted into the strainer inserting hole 26 of the upper case 22, the outlet 34 of the strainer 5 is mounted to the strainer mounting portion 16 of the lower case 14 via an O-ring 35 and connected to the fuel passage 17 as a fuel passage.

As shown in FIGs. 4, 6 and 8, an inlet 36 formed in one end of the pressure regulator 6 is mounted to the pressure regulator mounting portion 15 of the lower case 14 via an O-ring 37. The other end of the pressure regulator 6 is pressed downwardly by the pressure regulator holder 31 and sandwiched between the upper case 22 and the lower case 14. At this time, owing to pressure regulated by the pressure regulator 6, excess fuel is discharged into the reservoir 10 from a return port 6a. For this reason, since return of the fuel reserved in the reservoir 10 can be prevented from easily flow outside the reservoir 10, the fuel to the engine can be supplied stably and without waste.

As shown in FIGs. 1 and 3, a remaining amount alarming sensor of the fuel corresponds to a thermistor 38, for example. When there is a large amount of fuel within the fuel tank, the thermistor 38 is immersed in the fuel, and the temperature in the fuel tank 2 becomes low. On the other hand, when there is a small amount of fuel within the fuel tank, the thermistor 38 is not immersed in the fuel, and the temperature in the fuel tank 2 becomes high. For this reason, the thermistor 38 detects a remaining amount of fuel present in the fuel tank 2 by converting a temperature change to a resistance change.

As shown in FIGs. 3 and 9, in the fuel supplying apparatus 1, a fuel passage 41 formed inside both a conjunction cover 39 and a cover body 40, and a check valve 42 assembled (or incorporated) within the fuel passage 41 are provided, respectively. Any means of mounting the conjunction cover 39 to the upper case 22 may be used.

By mounting the conjunction cover 39 to the upper case 22, connections between the fuel passage 41 formed inside the conjunction cover 39 and the discharge port 32 of the fuel pump 4, and between the fuel passage 41 and the inlet 33 of the strainer 5 are mechanically performed, respectively. That is, the fuel pump 4 and the strainer 5 are communicated with each other via the fuel passage 41 of the conjunction cover 39.

Next, flow of the fuel to be supplied to the engine from the fuel tank 2 via the fuel supplying apparatus 1 will be explained.

As shown in FIG. 1, the fuel within the fuel tank 2 flows into the reservoir 10 and the auxiliary reservoir 12 from the fuel inlet 19. As shown in FIG. 2, 3 and 9, the fuel flows from the auxiliary reservoir 12 through the pump filter 13, the fuel pump 4, the fuel passage 41 of the conjunction cover 39, and the check valve 42 into the strainer 5.

As shown in FIG. 6, the fuel having purified by passing through the strainer 5 flows through the fuel passage 17 and the discharge port 7 into the fuel pipe, and thereby is supplied to the engine from the fuel pipe. In this way, the engine is driven.

Furthermore, as shown in FIGs. 1 and 2, by forming the auxiliary reservoir 12 in the reservoir 10, an amount of fuel capable of being supplied to the engine from the fuel supplying apparatus 1 increases. Accordingly, the volume of the fuel remaining in the reservoir 10 (that is, unavailably remaining amount) can be reduced in comparison with the conventional apparatus, so that efficient utilization of the fuel can be achieved, and thereby waste of the fuel can be avoided to a minimum.

### (Second embodiment)

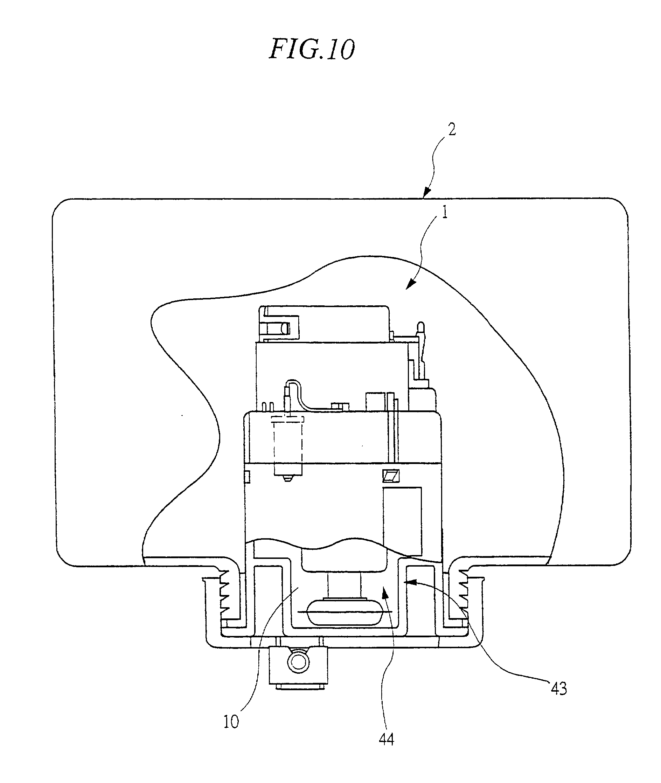

FIG. 10 shows a structure of the fuel supplying apparatus that is a second embodiment of the present invention, and is a side cross section showing the state that the fuel supplying apparatus is mounted to the fuel tank. The same members as the first embodiment are denoted by the same reference numerals, and explanations thereof will be omitted.

As shown in FIG. 10, the fuel supplying apparatus 1 that is the second embodiment is constituted such that a peripheral wall 43 is provided in the bottom portion of the reservoir 10 so as to surround only the periphery of the pump filter 13, and thereby an auxiliary reservoir 44 corresponds to a volume surrounded by the peripheral wall 43. In contrast to the first embodiment, by merely providing the peripheral wall 43 with the bottom portion of the reservoir 10, the formation of the auxiliary reservoir 44 can be achieved easily. As a result of this, it is possible to easily provide the auxiliary reservoir 44 with the conventional reservoir (not shown).

It goes without saying that the present invention is not limited to the above-mentioned embodiments, and can be changed in various ways without departing from the gist thereof.

According to the present invention, since the auxiliary reservoir is formed in the lower portion of the reservoir, the fuel flowing from the fuel tank can be reserved in the auxiliary reservoir being at lower position than the reservoir. Therefore, even if an amount of fuel remaining in the reservoir is reduced, the fuel pump can suck the fuel reserved in the auxiliary reservoir. As a result of this, stable supply of the fuel to the engine can be achieved.

Furthermore, by making an area of the bottom surface of the auxiliary reservoir approximately equal to that of the lower portion of the pump filter, the oil level of the fuel slightly remaining in the auxiliary reservoir can rise. Therefore, it is possible to make the fuel pump surely suck the fuel, and hence restrict the unavailably remaining amount of fuel present in the reservoir to a minimum.

Furthermore, the projecting height of the fuel pump can be reduced to such a degree that the pump filter of the fuel pump is accommodated in the auxiliary reservoir. As a result of this, the miniaturization of the fuel supplying apparatus itself can be achieved, which can cause the flexibility of the layout thereof to be improved.

## Claims

1. A fuel supplying apparatus (1) having a reservoir (10) mounted to a fuel tank (2) and reserving fuel within the fuel tank (2); a fuel pump (4) held within the reservoir (10) for sucking the fuel; an auxiliary reservoir (12; 44) formed in the bottom portion of the reservoir (10); the fuel supplying apparatus being **characterized in that** said fuel supplying apparatus is mounted to an opening (3) formed in the bottom portion (2a) of said fuel tank (2) so that the auxiliary reservoir (12; 44) protrudes from the bottom portion (2a) of said fuel tank (2).

2. A fuel supplying apparatus according to claim 1, **characterised in that** the reservoir (10) includes a strainer (5) for purifying the fuel discharged from the fuel pump (4) and a pressure regulator (6) for regulating the pressure of the fuel so as to keep the pressure constant.

3. A fuel supplying apparatus according to claim 1 or 2, **characterised in that** the auxiliary reservoir (12) accomodate a pump filter (13) of the fuel pump (4) therein.

4. A fuel supplying apparatus according to claim 3, **characterised in that** an area of a bottom surface of the auxiliary reservoir (12) is approximately equal to that of a lower portion of the pump filter (13).

## Patentansprüche

1. Brennstoffzufuhrvorrichtung (1) mit einem Reservoir (10), das an einem Brennstofftank (2) angebracht ist und Brennstoff in dem Brennstofftank (2) reserviert; einer Brennstoffpumpe (4), die in dem Reservoir (10) zum Ansaugen des Brennstoffs gehalten wird; und einem Hilfsreservoir (12; 44), das in dem unteren Abschnitt des Reservoirs (10) ausgebildet ist; wobei die Brennstoffzufuhrvorrichtung **dadurch gekennzeichnet ist, dass** die Brennstoffzufuhrvorrichtung an einer in dem unteren Abschnitt (2a) des Brennstofftanks (2) ausgebildeten Öffnung (3) angebracht ist, sodass das Hilfsreservoir (12; 44) von dem unteren Abschnitt (2a) des Brennstofftanks (2) hervorsteht.

2. Brennstoffzufuhrvorrichtung gemäß Anspruch 1, **dadurch gekennzeichnet, dass** das Reservoir (10) ein Sieb (5) zum Reinigen des von der Brennstoffpumpe (4) abgeführten Brennstoffs und einen Druckregler (6) zum Regeln des Drucks des Brennstoffs, um den Druck konstant zu halten, aufweist.

3. Brennstoffzufuhrvorrichtung gemäß Anspruch 1 oder 2, **dadurch gekennzeichnet, dass** das Hilfsreservoir (12) ein Pumpenfilter (13) der Brennstoffpumpe (4) darin unterbringt.

4. Brennstoffzufuhrvorrichtung gemäß Anspruch 3, **dadurch gekennzeichnet, dass** ein Bereich einer unteren Oberfläche des Hilfsreservoirs (12) ungefähr gleich dem eines unteren Abschnitts des Pumpenfilters (13) ist.

## Revendications

1. Appareil (1) d'alimentation en carburant comportant une retenue (10) montée sur un réservoir (2) de carburant et maintenant une réserve de carburant à l'intérieur du réservoir (2) de carburant ; une pompe à carburant (4) maintenue à l'intérieur de la retenue (10) destinée à aspirer le carburant ; une retenue auxiliaire (12 ; 44) formée dans la partie de fond de la retenue (10) ; l'appareil d'alimentation en carburant étant **caractérisé en ce qu'**il est monté sur une ouverture (3) formée dans la partie (2a) de fond dudit réservoir (2) de carburant, de sorte que la retenue auxiliaire (12 ; 44) fait saillie de la partie (2a) de fond dudit réservoir (2) de carburant.

2. Appareil d'alimentation en carburant selon la revendication 1, **caractérisé en ce que** la retenue (10) comprend une crépine (5) destinée à purifier le carburant déchargé par la pompe à carburant (4) et un régulateur (6) de pression destiné à réguler la pression du carburant de façon à la maintenir constante.

3. Appareil d'alimentation en carburant selon la revendication 1 ou 2, **caractérisé en ce que** la retenue auxiliaire (12) loge un filtre (13) à pompe de la pompe à carburant (4).

4. Appareil d'alimentation en carburant selon la revendication 3, **caractérisé en ce qu'**une superficie d'une surface de fond de la retenue auxiliaire (12) est sensiblement égale à celle d'une partie inférieure du filtre (13) à pompe.
